# EUROPÄISCHE PATENTSCHRIFT

(11) **EP 0 979 668 B1**
(45) Veröffentlichungstag und Bekanntmachung des Hinweises auf die Patenterteilung: **29.11.2006**
(21) Anmeldenummer: 99114868.5
(22) Anmeldetag: 29.07.1999
(51) Int. Cl.: B01D 21/24, B03B 11/00

(54) **Klarwasserabzug**
Discharge for clarified water
Décharge pour des eaux clarifiées

(30) Priorität: 12.08.1998 DE 19836563
(43) Veröffentlichungstag der Anmeldung: 16.02.2000
(73) Patentinhaber: DEGREMONT, 92500 Rueil-Malmaison (FR)
(72) Erfinder: Brauchli, Herbert, 8865 Bilten (CH)
(74) Vertreter: Laufhütte, Dieter

(56) Entgegenhaltungen:
- DE-A- 19 636 153
- DE-U- 29 722 637
- US-A- 4 695 376
- US-A- 5 118 412
- US-A- 5 154 835

## Beschreibung

Die vorliegende Erfindung betrifft einen Klarwasserabzug, insbesondere zum Abzug von Klarwasser aus SBR-Anlagen, mit einem Schwimmkörper, einem daran angeordneten verschließbaren Abzugselement, das einen Zulaufbereich zur Zufuhr des Klarwassers in das Abzugselement aufweist, sowie mit einer mit dem Abzugselement in Verbindung stehenden Ablaufleitung zur Abführung des Klarwassers.

Derartige Klarwasserabzüge werden vielfach bei SBR-Anlagen eingesetzt und dienen hier dazu, am Ende der biologischen Behandlung von Abwasser, d.h. am Ende eines SBR-Zyklus, das während des jeweiligen Zyklus behandelte Wasser abzulassen bzw. zu dekantieren. Der Klarwasserablauf muß dabei die Aufgaben erfüllen, einerseits die Ableitung des behandelten Wassers zu gewährleisten, andererseits jedoch die Biomasse im Reaktor zurückzuhalten, damit diese für weitere Behandlungszyklen zur Verfügung steht. Die Biomasse liegt während des Klarwasserabzugs zum größten Teil sedimentiert und zu einem geringen Teil an der Wasseroberfläche schwimmend, d.h. flotiert, vor.

Entsprechend ergibt sich an einen optimalen Klarwasserablauf die Forderung, daß dieser schwimmend angeordnet ist, um jederzeit den größtmöglichen Abstand zum sedimentierten Schlamm zu gewährleisten. Darüber hinaus muß ein Klarwasserablauf verschließbar ausgeführt sein. Dadurch wird es möglich, den Abzug nur dann zu öffnen, wenn Klarwasser abgelassen werden soll, während er in den übrigen Zeiten, d.h. während der Belüftungs- und Mischphasen, völlig geschlossen ist. Dadurch wird erreicht, daß kein Schlamm eindringen kann, der beim Klarwasserabzug mit in den Ablauf gelangt.

Aufgrund der Tatsache, daß der Schlamm teilweise auch als Schwimmschlamm vorliegt, muß ein idealer Klarwasserablauf ferner die Aufgabe erfüllen, das Wasser nicht direkt an der Wasseroberfläche, sondern unterhalb abzuziehen, um entsprechend den schwimmenden Schlamm zurückzuhalten. Ferner muß der Klarwasserabzug derart ausgeführt sein, daß die Strömungsgeschwindigkeiten beim Ablauf des Wassers begrenzt sind, so daß sedimentierter Schlamm nicht mitgerissen wird.

Es sind gattungsgemäße Klarwasserabzüge bekannt, die einen Schwimmkörper und ein unterhalb der Wasseroberfläche angeordnetes Abzugswehr aufweisen. Das Abzugswehr ist mit einer Schlauch- oder Rohrleitung verbunden, durch die das dem Abzugswehr zugeführte Klarwasser abgeleitet wird. Um die geforderte Verschließbarkeit des Klarwasserablaufes zu erfüllen, wird das Abzugswehr bei vorbekannten Klarwasserabzügen durch eine oberhalb des Schwimmkörpers angeordnete Mechanik geschlossen und nur bei Bedarf, d.h. beim Dekantieren, geöffnet. Bei einem derartigen Klarwasserabzug ist es nachteilig, daß einerseits mechanische Teile zum Öffnen und Schließen des Klarwasserabzuges benötigt werden und daß andererseits die Dichtheit des Abzuges insbesondere nach längerer Benutzung aufgrund von Verschleißerscheinungen nicht zuverlässig gewährleistet werden kann.

Das Dokument US-A-5154835 beschreibt eine Abzugsvorrichtung, bei dem ein Abzug für an der Wasseroberfläche flotierende Fremdstoffe mittels Luftpolsters verschliessbar ist.

Es ist daher die Aufgabe der vorliegenden Erfindung einen gattungsgemäßen Klarwasserabzug dahingehend weiterzubilden, daß dieser keinerlei mechanisch bewegte Teile zum Öffnen und Schließen des Abzuges aufweist und auch nach längerem Betrieb zuverlässig schließt.

Diese Aufgabe wird ausgehend von einem gattungsgemäßen Klarwasserabzug dadurch gelöst, daß der Zulaufbereich derart ausgeführt ist, daß dieser mittels eines Luft- oder Gaspolsters verschließbar ist, daß Mittel vorgesehen sind, mittels derer das Luft- oder Gaspolster im Zulaufbereich erzeugbar ist, sowie daß eine Entlüftungsvorrichtung vorgesehen ist, mittels derer das Luft- oder Gaspolster aus dem Zulaufbereich abziehbar ist. Ein derartig ausgebildeter Klarwasserabzug erfüllt die obengenannten Anforderungen und weist darüber hinaus den Vorteil auf, daß zum Schließen des Klarwasserabzuges bzw. des Abzugselementes keine mechanisch bewegten Teile benötigt werden. Vielmehr beruht das Schließen auf der Schaffung eines Luft- oder Gaspolsters, das derart im Zulaufbereich des Abzugselementes angeordnet wird, daß dieser zuverlässig verschließbar ist und entsprechend das Eindringen von Wasser in das Abzugselement verhindert.

Ein weiterer Vorteil gegenüber vorbekannten Klarwasserabzügen ergibt sich daraus, daß ein Verschleiß von Dichtelementen, der zu einem entsprechenden Undichtwerden des Klarwasserabzuges führen kann, im vorliegenden Fall ohne Bedeutung ist, da die Verschlußwirkung ausschließlich durch das erfindungsgemäße Luft- oder Gaspolster erzielt wird.

Gemäß einer bevorzugten Ausgestaltung der vorliegenden Erfindung ist der Zulaufbereich zwischen dem Abzugselement und dem Schwimmkörper angeordnet.

Besonders vorteilhaft ist es, wenn das Abzugselement als Abzugswehr ausgeführt ist. Der Zulaufbereich des Klarwasserabzuges kann durch die Überlaufkante des Abzugswehres und eine nutförmige Ausnehmung eines dem Abzugswehr gegenüberliegend angeordneten Bauteils des Klarwasserabzuges gebildet werden. Entsprechend wird erfindungsgemäß zum Schließen des Klarwasserabzuges ein Luft- oder Gaspolster in der nutförmigen Ausnehmung gebildet, wodurch der Zutritt von Wasser über die Überlaufkante des Abzugswehres wirksam verhindert wird.

Gemäß einer bevorzugten Ausgestaltung der vorliegenden Erfindung ist das dem Abzugswehr gegenüberliegend angeordnete Bauteil der Schwimmkörper des Klarwasserabzuges. Statt dessen ist es ebenso möglich, ein beliebiges anderes Bauteil vorzusehen, das auf seiner der Überlaufkante zugeordneten Seite eine entsprechende nutförmige Ausnehmung aufweist.

In weiterer Ausgestaltung der vorliegenden Erfindung ist vorgesehen, daß die Entlüftungsvorrichtung ein Ventil umfaßt. Die Mittel zur Erzeugung eines Luft- oder Gaspolsters können einen Verdichter umfassen.

Gemäß einer bevorzugten Ausgestaltung der vorliegenden Erfindung können Mittel vorgesehen sein, mittels derer der Schwimmkörper sowie das Abzugselement in einer horizontalen Lage fixiert werden. Dies ist insbesondere deshalb vorteilhaft, da der Schwerpunkt des Klarwasserabzuges gemäß der vorliegenden Erfindung durch das zeitweise erzeugte Luftpolster nach oben verschoben wird, wodurch die stabile Lage des Klarwasserabzuges im Wasser beeinträchtigt wird.

Es können zwei schwenkbar an dem Klarwasserabzug sowie an einer Befestigungsvorrichtung angeordnete und parallel verlaufende Führungselemente vorgesehen sein, wobei der Abstand der Schwenkachsen an der Befestigungsvorrichtung und an dem Klarwasserabzug identisch ist und wobei die Verbindungslinien der Schwenkachsen an der Befestigungsvorrichtung und an dem Klarwasserabzug parallel verlaufen. Die Führungselemente sind im Sinne eines Parallelogramms angeordnet, wodurch gewährleistet wird, daß die horizontale Ausrichtung des Abzugselementes sowie des Schwimmkörpers unabhängig von der Höhe des Wasserspiegels beibehalten wird.

Besonders vorteilhaft ist es, wenn eines der Führungselemente durch die Ablaufleitung gebildet wird.

In weiterer Ausgestaltung der vorliegenden Erfindung ist vorgesehen, daß wenigstens eines der Führungselemente an dem Klarwasserabzug sowie an der Befestigungsvorrichtung an jeweils zwei Punkten angelenkt ist.

Weitere Einzelheiten und Vorteile der vorliegenden Erfindung werden anhand eines in der Zeichnung dargestellten Ausführungsbeispiels näher erläutert. Es zeigen:
- Fig. 1:: eine schematische Querschnittsansicht des erfindungsgemäßen Klarwasserabzuges im geschlossenen Zustand und während der Dekantierphase,
- Fig. 2:: eine schematische Darstellung des erfindungsgemäßen Klarwasserabzuges in einer Seitenansicht und einer Draufsicht,
- Fig. 3:: eine schematische Darstellung eines gattungsgemäßen Klarwasserabzuges nach dem Stand der Technik,
- Fig. 4:: eine schematische Darstellung eines Klarwasserabzuges nach dem Stand der Technik mit unterhalb der Wasseroberfläche angeordnetem Dekanter,
- Fig. 5:: eine schematische Darstellung eines Klarwasserabzuges nach dem Stand der Technik mit in das Becken absenkbarer Abzugswanne,
- Fig. 6:: eine schematische Darstellung eines Klarwasserabzuges nach dem Stand der Technik mit Syphon und
- Fig. 7:: eine schematische Darstellung eines Klarwasserabzuges nach dem Stand der Technik mit teleskopierbarer Ablaufleitung.

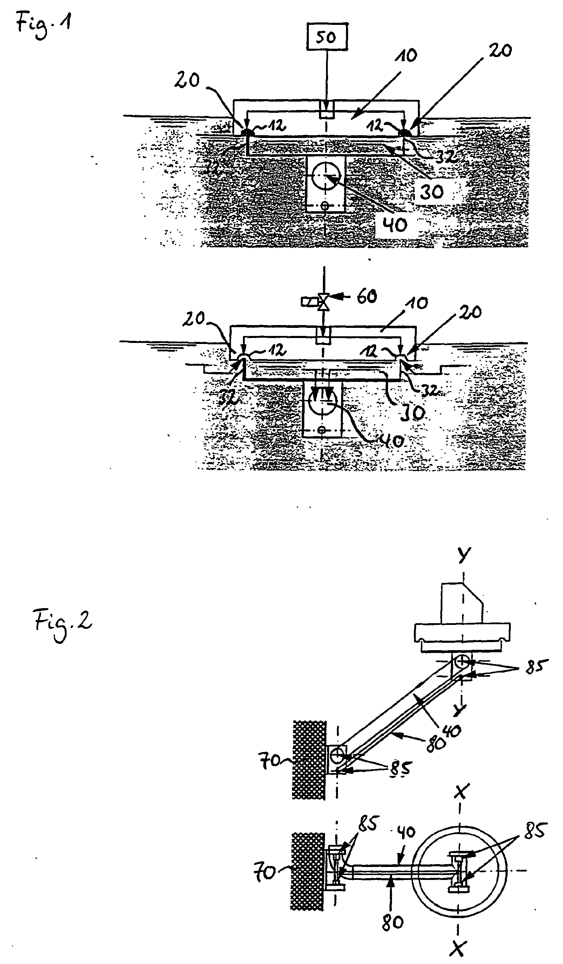

Fig. 1 zeigt in einer schematischen Querschnittsansicht den erfindungsgemäßen Klarwasserabzug im geschlossenen Zustand (oben) und während der Dekantierphase (unten).

Unterhalb des Schwimmkörpers 10 ist das Abzugswehr 30 angeordnet, das die umlaufende Überlaufkante 32 aufweist. Der Schwimmkörper 10 weist in seinem unteren, der Überlaufkante 32 gegenüberliegend angeordneten Bereich die nutförmige Ausnehmung 12 auf. Der Zulaufbereich 20 des Abzugswehrs 30 wird entsprechend durch die Überlaufkante 32 sowie die nutförmige Ausnehmung 12 begrenzt.

Es ist ferner ein Verdichter 50 vorgesehen, der mit einer flexiblen Leitung mit dem Schwimmkörper 10 in Verbindung steht, wobei innerhalb des Schwimmkörpers 10 Leitungen zur Zufuhr der verdichteten Luft zu der nutförmigen Ausnehmung 12 vorgesehen sind.

Das Abzugswehr 30 ist in seinem unteren Bereich mit der Ablaufleitung 40 verbunden, durch die das dem Abzugswehr 30 zugeführte Klarwasser aus diesem abgeführt wird.

Wie Fig. 1, unten verdeutlicht, ist ferner ein Ventil 60 vorgesehen, das mit den sich in dem Schwimmkörper 10 erstreckenden Luft- bzw. Gasleitungen, die zu der nutförmigen Ausführung 12 führen, in Verbindung steht. In Fig. 1, oben ist das Ventil 60 und in Fig. 1, unten der Verdichter 50 nicht dargestellt.

Soll das Abzugswehr 30 geschlossen werden, wird mittels des Verdichters 50 und der sich von diesem erstreckenden Leitungen Druckluft oder ein beliebiges Gasgemisch in die nutförmigen Ausnehmungen 12 geführt, wodurch hier ein entsprechendes Luft- bzw. Gaspolster entsteht. Dabei ist die Überlaufkante 32 des Abzugswehrs 30 erfindungsgemäß derart angeordnet, daß ein Überlauf über diese Kante 32 durch Klarwasser unmöglich wird, wenn die nutförmige Ausnehmung 12 mit dem Luft- bzw. Gasgemisch gefüllt ist.

Die Ablaufleitung 40 weist ferner ein (nicht dargestelltes) und vorzugsweise außerhalb des Klarwasserbeckens angeordnetes Absperrorgan auf, das nur dann geöffnet wird, wenn Klarwasser abgelassen werden soll.

Soll nun Klarwasser dekantiert werden, wird das in Fig. 1, unten dargestellte Ventil 60 geöffnet, wodurch die Luft bzw. das Gas aus der nutförmigen Ausnehmung 12 abgeführt wird und der Zulaufbereich 20 für den Durchtritt von Wasser freigegeben wird. Das Wasser strömt entsprechend der in Fig. 1, unten dargestellten Pfeile zunächst durch den Zulaufbereich 20 in das Abzugswehr 30 und wird aus diesem durch die Ablaufleitung 40 abgeführt.

Fig. 2, oben zeigt in einer schematischen Seitenansicht an dem Klarwasserabzug sowie an der Befestigungsvorrichtung 70 angeordnete und parallel verlaufende Führungselemente 40, 80. Dabei wird das Führungselement 40 durch die Ablaufleitung 40 gebildet. Beide Führungselemente 40, 80 sind mittels der Schwenkachsen 85 schwenkbar mit dem Klarwasserabzug sowie mit der Befestigungsvorrichtung 70 verbunden. Der Abstand der Schwenkachsen 85 an der Befestigungsvorrichtung 70 und an dem Klarwasserabzug ist identisch. Darüber hinaus sind die Verbindungslinien der Schwenkachsen 85 an der Befestigungsvorrichtung 70 und an dem Klarwasserabzug zueinander parallel angeordnet. Die Schwenkachsen 85 legen somit die vier Eckpunkte eines Parallelogramms fest. Durch eine derartige Anordnung wird erreicht, daß unabhängig von der Höhe des Wasserstandes das Abzugswehr 30 stets in einer horizontalen Lage bzw. der Klarwasserabzug in der in Fig. 2, oben mit Y-Y bezeichneten Ebene gehalten wird.

Fig. 2, unten zeigt, daß das Führungselement 80 an dem Klarwasserabzug sowie an der Befestigungsvorrichtung 70 an jeweils zwei Punkten 85 angelenkt ist. Daraus ergibt sich, daß eine Bewegungsmöglichkeit des Klarwasserabzugs in der Ebene X-X nicht mehr gegeben ist.

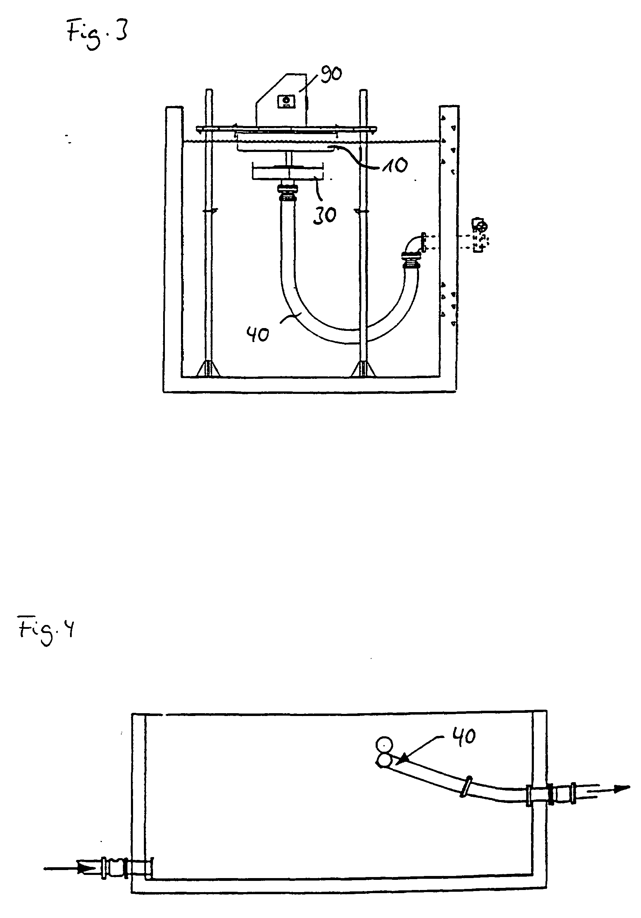

Die Fig. 3-7 zeigen Klarwasserabzüge nach dem Stand der Technik.

Fig. 3 zeigt einen gattungsgemäßen Klarwasserabzug mit Schwimmkörper 10 und darunter angeordnetem Abzugswehr 30. Das Abzugswehr 30 wird mittels eines mechanisch zu betätigenden Ventils geöffnet und verschlossen, wobei die Ventilbetätigung durch die oberhalb des Schwimmkörpers 10 befindliche Mechanik 90 bewirkt wird. Das Abzugswehr 30 ist zur Abführung des Klarwassers mit der Ablaufleitung 40 verbunden.

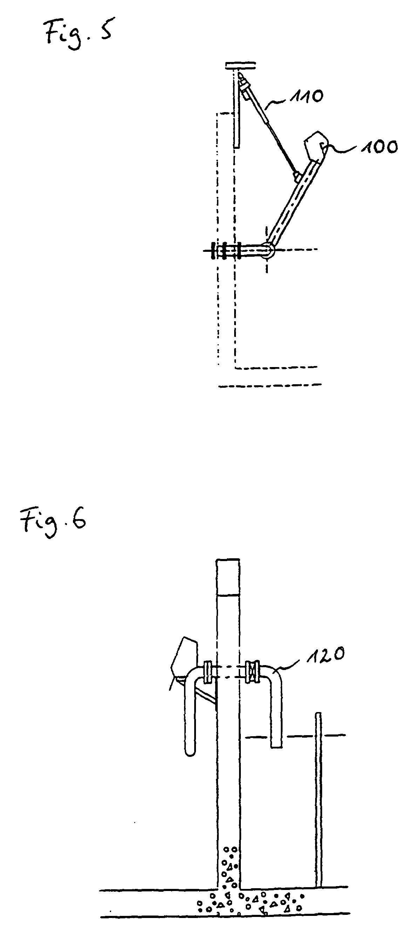

Fig. 4 zeigt eine Dekantiervorrichtung, bei der der Klarwasserabzug stets unterhalb der Wasseroberfläche erfolgt. Hierbei ergibt sich der Nachteil, daß während des Belüftens und Mischens ein Verschließen der Ablaufleitung 40 unmöglich ist, was dazu führt, daß in diesen Zeiten Schlamm in die Ablaufleitung 40 eindringen kann.

Fig. 5 zeigt einen Klarwasserabzug, bei der eine Abzugswanne 100 mittels einer mechanischen Absenkeinrichtung 110 in das Becken abgesenkt werden kann, während die Wanne 100 in den übrigen Zeiten aus dem Becken herausgehoben ist. Bei einem derartigen Klarwasserabzug besteht ein Nachteil darin, daß die Abzugswanne 100 beim Absenken stets durch die Schwimmschlammschicht gefahren wird und beim Anheben stets Schwimmschlamm aufnimmt und aus dem Becken entfernt.

Der Klarwasserabzug gemäß Fig. 6 umfaßt einen Syphon 120, durch den Wasser aus dem Becken abgezogen werden kann. Hierbei ergibt sich der Nachteil, daß einerseits die möglichen Wasserspiegelabsenkungen begrenzt sind und andererseits der Abstand vom Schlammspiegel nicht optimal ist.

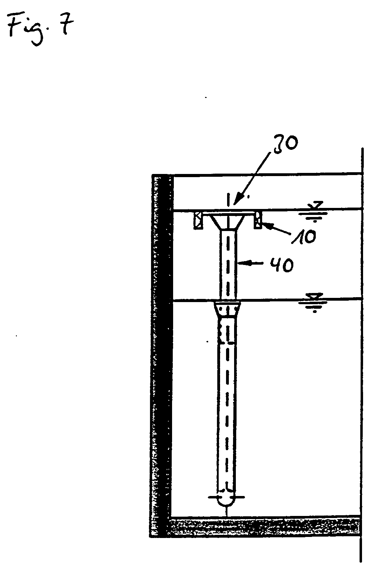

Fig. 7 zeigt schließlich einen Klarwasserabzug, bei dem das Klarwasser über ein Abzugswehr 30 abgezogen wird, das an Schwimmkörpern 10 befestigt ist und entsprechend auf diese Weise stets an der Wasseroberfläche gehalten wird. Bei diesem Klarwasserabzug ist die Ablaufleitung 40 teleskopartig ausgeführt und wird bei Absenken des Wasserspiegels um einen entsprechenden Betrag eingefahren. Hierbei ergibt sich der Nachteil, daß die Dichtung der teleskopartig miteinander verbundenen Ablaufleitungen 40 nur mangelhaft ausführbar ist, wodurch Schlamm in die Ablaufleitung 40 eindringen kann. Darüber hinaus ist die mögliche Absenkung des Wasserspiegels begrenzt.

## Patentansprüche

1. Klarwasserabzug, insbesondere zum Abzug von Klarwasser aus SBR-Anlagen, bei welchem das Klarwasser unter der Wasseroberfläche abgezogen wird, mit einem Schwimmkörper (10), einem daran angeordneten verschließbaren Abzugselement, das einen Zulaufbereich (20) zur Zufuhr des Klarwassers in das Abzugselement aufweist, sowie mit einer mit dem Abzugselement in Verbindung stehenden Ablaufleitung (40) zur Abführung des Klarwassers,
**dadurch gekennzeichnet,**
**daß** der Zulaufbereich (20) derart ausgeführt ist, daß dieser mittels eines Luft- oder Gaspolsters verschließbar ist, daß Mittel vorgesehen sind, mittels derer das Luft- oder Gaspolster im Zulaufbereich (20) erzeugbar ist, sowie daß eine Entlüftungsvorrichtung vorgesehen ist, mittels derer das Luft- oder Gaspolster aus dem Zulaufbereich (20) abziehbar ist.

2. Klarwasserabzug nach Anspruch 1, **dadurch gekennzeichnet, daß** der Zulaufbereich (20) zwischen dem Abzugselement und dem Schwimmkörper (10) angeordnet ist.

3. Klarwasserabzug nach Anspruch 1 oder 2, **dadurch gekennzeichnet, daß** das Abzugselement als Abzugswehr (30) ausgeführt ist.

4. Klarwasserabzug nach Anspruch 3, **dadurch gekennzeichnet, daß** der Zulaufbereich (20) durch die Überlaufkante (32) des Abzugswehres (30) und eine nutförmige Ausnehmung (12) eines dem Abzugswehr (30) gegenüberliegend angeordneten Bauteils des Klarwasserabzugs gebildet wird.

5. Klarwasserabzug nach Anspruch 4, **dadurch gekennzeichnet, daß** das dem Abzugswehr (30) gegenüberliegend angeordnete Bauteil der Schwimmkörper (10) des Klarwasserabzuges ist.

6. Klarwasserabzug nach einem oder mehreren der Ansprüche 1 bis 5, **dadurch gekennzeichnet, daß** die Entlüftungsvorrichtung ein Ventil (60) umfaßt.

7. Klarwasserabzug nach einem oder mehreren der Ansprüche 1 bis 6, **dadurch gekennzeichnet, daß** die Mittel zur Erzeugung eines Luft- oder Gaspolsters einen Verdichter (50) umfassen.

8. Klarwasserabzug nach einem oder mehreren der Ansprüche 1 bis 7, **dadurch gekennzeichnet, daß** Mittel vorgesehen sind, mittels derer der Schwimmkörper sowie das Abzugselement in einer horizontalen Lage fixiert werden.

9. Klarwasserabzug nach Anspruch 8, **dadurch gekennzeichnet, daß** zwei schwenkbar an dem Klarwasserabzug sowie an einer Befestigungsvorrichtung (70) angeordnete und parallel verlaufende Führungselemente (40,80) vorgesehen sind, wobei der Abstand der Schwenkachsen an der Befestigungsvorrichtung (70) und an dem Klarwasserabzug identisch ist und wobei die Verbindungslinien der Schwenkachsen an der Befestigungsvorrichtung (70) und an dem Klarwasserabzug parallel verlaufen.

10. Klarwasserabzug nach Anspruch 9, **dadurch gekennzeichnet, daß** wenigstens eines der Führungselemente (40) durch die Ablaufleitung (40) gebildet wird.

11. Klarwasserabzug nach Anspruch 9 oder 10, **dadurch gekennzeichnet, daß** wenigstens eines der Führungselemente (80) an dem Klarwasserabzug sowie an der Befestigungsvorrichtung (70) an jeweils zwei Punkten angelenkt ist.

## Claims

1. A clear water extractor, in particular for extracting clear water from SBR units, with which the clear water is extracted below the surface of the water, comprising a floating element (10), a closeable extractor element disposed on the latter and which has an inflow region (20) for feeding the clear water into the extractor element, and a drain pipe (40) connected to the extractor element for discharging the clear water,
**characterised in that**
the inflow region (20) is designed such that the latter can be closed by means of an air or gas cushion, such that means are provided by means of which the air or gas cushion can be produced in the inflow region (20), and such that a venting device is provided by means of which the air or gas cushion can be extracted from the inflow region (20).

2. The clear water extractor according to Claim 1, **characterised in that** the inflow region (20) is disposed between the extractor element and the floating element (10).

3. The clear water extractor according to Claim 1 or 2, **characterised in that** the extractor element is in the form of an extractor weir (30).

4. The clear water extractor according to Claim 3, **characterised in that** the inflow region (20) is formed by the overflow edge (32) of the extractor weir (30) and a groove-shaped recess (12) of a component of the clear water extractor disposed opposite the extractor weir (30).

5. The clear water extractor according to Claim 4, **characterised in that** the component disposed opposite the extractor weir (30) is the floating element (10) of the clear water extractor.

6. The clear water extractor according to one or more of Claims 1 to 5, **characterised in that** the venting device includes a valve (60).

7. The clear water extractor according to one or more of Claims 1 to 6, **characterised in that** the means for producing an air or gas cushion include a compressor (50).

8. The clear water extractor according to one or more of Claims 1 to 7, **characterised in that** means are provided by means of which the floating element and the extractor element are fixed in a horizontal position.

9. The clear water extractor according to Claim 8, **characterised in that** two guide elements (40. 80) pivotably disposed on the clear water extractor and on an attachment device (70) and extending parallel to one another are provided, the distance between the pivot axes on the attachment device (70) and on the clear water extractor being identical, and the connection lines of the pivot axes extending parallel on the attachment device (70) and on the clear water extractor.

10. The clear water extractor according to Claim 9, **characterised in that** at least one of the guide elements (40) is formed by the discharge pipe (40).

11. The clear water extractor according to Claim 9 or 10, **characterised in that** at least one of the guide elements (80) is respectively pivoted at two points on the clear water extractor and on the attachment device (70).

## Revendications

1. Décharge clarifiée, en particulier pour la décharge d'eau clarifiée provenant d'installations SBR, sur laquelle l'eau clarifiée est retirée au-dessous du niveau d'eau, comprenant un flotteur (10), un élément d'enlèvement pouvant être fermé et disposé dessus, qui présente une zone d'arrivée (20) pour l'arrivée de l'eau clarifiée dans l'élément de décharge, ainsi qu'avec une conduite d'écoulement (40), en liaison avec l'élément de décharge, pour l'évacuation de l'eau clarifiée,
**caractérisée en ce que**
la zone d'arrivée (20) est réalisée de telle sorte que celle-ci peut être fermée au moyen d'un matelas d'air ou de gaz, **en ce que** des moyens sont prévus, au moyen desquels le matelas d'air ou de gaz peut être généré dans la zone d'arrivée (20), et **en ce que** le dispositif de purge d'air est prévu, au moyen duquel le matelas d'air ou de gaz peut être enlevé de la zone d'arrivée (20).

2. Décharge d'eau clarifiée selon la revendication 1, **caractérisée en ce que** la zone d'arrivée (20) est disposée entre l'élément de décharge et le flotteur (10).

3. Décharge d'eau clarifiée selon la revendication 1 ou 2, **caractérisée en ce que** l'élément de décharge est conçu comme un déversoir de décharge (30).

4. Décharge d'eau clarifiée selon la revendication 3, **caractérisée en ce que** la zone d'arrivée (20) est formée par l'arête de trop-plein (32) du déversoir de décharge (30) et un évidement (12) en forme de rainure d'un composant, disposé en face du déversoir de décharge (30), de la décharge pour eau clarifiée.

5. Décharge d'eau clarifiée selon la revendication 4, **caractérisée en ce que** le composant disposé en face du déversoir de décharge (30) est le flotteur (10) de la décharge d'eau clarifiée.

6. Décharge d'eau clarifiée selon l'une quelconque ou plusieurs des revendications 1 à 5, **caractérisée en ce que** le dispositif de purge d'air comprend une vanne (60).

7. Décharge d'eau clarifiée selon l'une quelconque ou plusieurs des revendications 1 à 6, **caractérisée en ce que** les moyens pour générer un matelas d'air ou de gaz comprennent un compresseur (50).

8. Décharge d'eau clarifiée selon l'une quelconque ou plusieurs des revendications 1 à 7, **caractérisée en ce que** des moyens sont prévus, au moyen desquels le flotteur et l'élément de décharge sont fixés dans une position horizontale.

9. Décharge d'eau clarifiée selon la revendication 8, **caractérisée en ce qu'**il est prévu deux éléments de guidage (40, 80) disposés de façon basculante sur la décharge d'eau clarifiée et sur un dispositif de fixation (70) et agencés parallèlement, l'espacement des axes de pivotement sur le dispositif de fixation (70) sur la décharge d'eau clarifiée étant identique et les lignes de liaison des axes de pivotement sur le dispositif de fixation (70) et sur la décharge d'eau clarifiée étant agencées parallèlement.

10. Décharge d'eau clarifiée selon la revendication 9, **caractérisée en ce qu'**au moins l'un des éléments de guidage (40) est formé par la conduite d'écoulement (40).

11. Décharge d'eau clarifiée selon la revendication 9 ou 10, **caractérisée en ce qu'**au moins l'un des éléments de guidage (80) est articulé sur la décharge d'eau clarifiée et sur le dispositif de fixation (70) en respectivement deux points.
